(19) Europäisches Patentamt
European Patent Office
Office européen des brevets

(11) EP 4 538 397 A1

(12) **EUROPEAN PATENT APPLICATION**
published in accordance with Art. 153(4) EPC

(43) Date of publication:
**16.04.2025 Bulletin 2025/16**

(21) Application number: **23838930.8**

(22) Date of filing: **11.07.2023**

(51) International Patent Classification (IPC):
***C21D 8/12*** *(2006.01)*

(52) Cooperative Patent Classification (CPC):
**B23K 26/067; B23K 26/073; B23K 26/362; C21D 8/12**

(86) International application number:
**PCT/CN2023/106738**

(87) International publication number:
**WO 2024/012439 (18.01.2024 Gazette 2024/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.07.2022 CN 202210813491**

(71) Applicant: **BAOSHAN IRON & STEEL CO., LTD.**
**Shanghai 201900 (CN)**

(72) Inventors:
- **ZHAO, Zipeng**
  **Shanghai 201900 (CN)**
- **LI, Guobao**
  **Shanghai 201900 (CN)**
- **XIANG, Banglin**
  **Shanghai 201900 (CN)**
- **MA, Changsong**
  **Shanghai 201900 (CN)**
- **SUN, Huande**
  **Shanghai 201900 (CN)**
- **WU, Meihong**
  **Shanghai 201900 (CN)**
- **JI, Yaming**
  **Shanghai 201900 (CN)**
- **LING, Chen**
  **Shanghai 201900 (CN)**
- **LIU, Hai**
  **Shanghai 201900 (CN)**

(74) Representative: **Maiwald GmbH**
**Elisenhof**
**Elisenstraße 3**
**80335 München (DE)**

# (54) LASER SCRIBING METHOD FOR LOW-IRON-LOSS ORIENTED SILICON STEEL PLATE, AND ORIENTED SILICON STEEL PLATE

(57) Disclosed in the present invention is a method for laser scribing an oriented silicon steel plate. When the laser scribing method is used for performing surface laser scribing on an oriented silicon steel plate, corresponding to each length position in a direction of rolling the oriented silicon steel plate, multiple focused light spots are formed on a surface of the oriented silicon steel plate in a laser beam splitting manner. The multiple focused light spots are arranged in the width direction of the oriented silicon steel plate, and have an energy gap area between each other, wherein each focused light spot has a dimension b in the width direction of the oriented silicon steel plate greater than a dimension a in the lengthwise direction of the oriented silicon steel plate. Further disclosed in the present invention is an oriented silicon steel plate, which is prepared by using the method for laser scribing in the present invention. By means of the oriented silicon steel plate, the loss of a surface coating is avoided while the iron loss of oriented silicon steel is reduced.

EP 4 538 397 A1

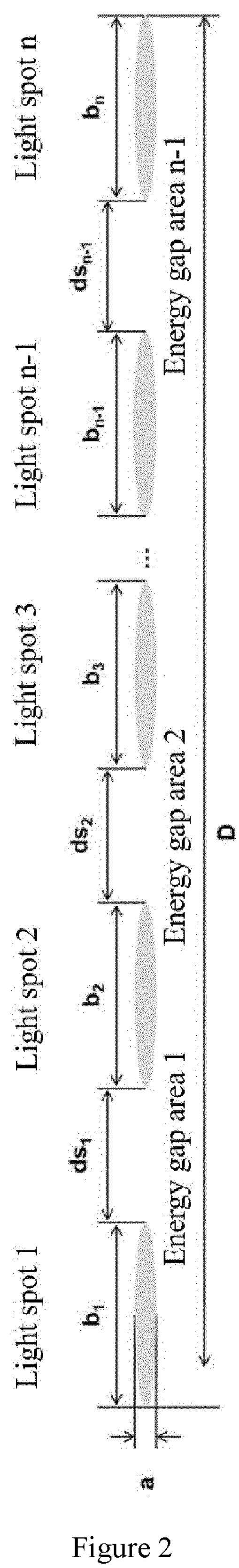
Light spot 1
Light spot 2
Light spot 3
Light spot n-1
Light spot n
b1
ds1
b2
ds2
b3
...
bn-1
dsn-1
bn
Energy gap area 1
Energy gap area 2
Energy gap area n-1
D
a

Figure 2

## Description

### TECHNICAL FIELD

The present invention relates to a manufacturing process of an oriented silicon steel, and in particular, to a method for laser scribing an oriented silicon steel plate.

### BACKGROUND

In recent years, as global energy and environmental issues have become increasingly prominent, countries around the world have generally raised the energy consumption standards for various types of energy-consuming equipment to reduce their reactive energy consumption. For example, in a power transmission system, losses caused by transformers account for about 40% of the total loss of the system. The iron core of an oriented silicon steel is the core component of a transformer, and its loss accounts for about 20% of the total loss.

The loss caused by the iron core is usually referred to as iron loss. Therefore, reducing the iron loss of oriented silicon steels used to prepare transformer cores has huge economic and social benefits.

As is well known, oriented silicon steel is named after its internal grain arrangement direction, which is roughly the same as the rolling direction of the steel plate. For an oriented silicon steel plate, due to the grain arrangement direction being in easy magnetization direction, the higher the grain orientation degree, the better the magnetic properties of the silicon steel plate, which is manifested as higher magnetic induction and lower iron loss. Within the grains of oriented silicon steel, there are magnetic domain structures caused by spontaneous magnetization of ferromagnets. The magnetic moments of each atom in each magnetic domain are spontaneously arranged in parallel to form a 180° magnetic domain, which is parallel to the easy magnetization direction of the grain {110}<100>. Adjacent magnetic domains are opposite to each other by 180°, and there is a magnetic domain wall composed of dozens to hundreds of atomic layers between them. In the process of magnetization, magnetic moments in adjacent magnetic domains are arranged in the same direction through movement of the magnetic domain wall, thereby realizing magnetic conduction performance. Therefore, the magnetic domain structure is the result of the principle of minimum energy action, and is also a basic factor affecting the steel loss, magnetic induction and magnetostriction properties of oriented silicon steel.

It should be noted that the magnetic conduction performance of a silicon steel sheet is manifested as magnetic induction, which is generally represented by $B_8$, a magnetic flux density (T) of a silicon steel sheet under an excitation magnetic field of 800A/m; iron loss is generally represented by $P_{17/50}$, that is, , an ineffective electric energy (W/kg) consumed by magnetization of a silicon steel sheet when magnetic flux density in a strip steel reaches 1.7T under an AC excitation field of 50Hz.

It is known from the current prior art that the iron loss of an oriented silicon steel sheet includes three parts: hysteresis loss, eddy current loss and abnormal eddy current loss. The hysteresis loss is an energy loss caused by hysteresis phenomenon in magnetic materials during the magnetization and demagnetization process where magnetic induction intensity lags behind the change of magnetic field intensity due to factors such as inclusions, crystal defects, internal stress and crystal orientation that hinder domain wall motion, resulting in obstruction of magnetic flux change. The eddy current loss is an energy loss resulting from eddy current caused by local electromotive force induced magnetic flux change during alternating magnetization of an oriented silicon steel plate, which is related to the conductivity and thickness of the oriented silicon steel plate. The abnormal eddy current loss is an energy loss caused by different structures of magnetic domains of an oriented silicon steel plate during magnetization, which is mainly affected by the width of the magnetic domains.

At present, there are three main methods to improve the performance of an oriented silicon steel:

(1) controlling the secondary recrystallization structure of an finished product through metallurgical means, thereby improving the orientation degree and reducing the iron loss of the oriented silicon steel; (2) forming a tension coating on the surface of the oriented silicon steel to refine magnetic domains and reduce iron loss; (3) scribing the surface of the oriented silicon steel by laser, electron beam, mechanical, electrochemical and other means to form linear stress or strain, thereby refining the magnetic domains and reducing iron loss.

Among these three methods, the above method (3) has received the most attention and is currently one of the research hotspots in this field. The following is a brief description of the principle of reducing iron loss by refining magnetic domains by scribing in the above method (3): there is a magnetic domain structure inside the grains of an oriented silicon steel, and in the absence of external field conditions, magnetic domains inside oriented silicon steel are mainly 180° magnetic domains arranged in reverse parallel. The width of a single magnetic domain can usually reach tens of microns or even several millimeters. There is a transition layer of tens to hundreds of atomic layers between adjacent magnetic domains, which is called a magnetic domain wall. In the process of magnetization, the magnetic moment rotates under the drive of external field, and migration of the magnetic domain walls causes adjacent magnetic domains to merge with each other, thereby realizing magnetic conduction function. At the same time, differences of magnetic domain structures in different regions during the migration of the magnetic domain walls causes micro-eddy currents to be generated in micro-regions, thereby generating eddy current loss, which is referred to as abnormal eddy current loss Pa for an oriented silicon steel.

It can be seen that the abnormal eddy current loss Pa is directly related to inherent magnetic domain structure of an oriented silicon steel, which is further directly related to magnetic domain width of the oriented silicon steel. Therefore, reducing the magnetic domain width can effectively reduce the abnormal eddy current loss Pa. The abnormal eddy current loss Pa accounts for a large proportion of overall loss of an oriented silicon steel, especially for a thin-gauge oriented silicon steel with a thickness of 0.23 mm or less, the abnormal eddy current loss Pa can account for more than 40%. Therefore, using scribing to refine magnetic domains of an oriented silicon steel, that is, reducing the magnetic domain width, can effectively reduce the abnormal eddy current loss, thereby reducing the overall iron loss of the oriented silicon steel.

At present, the technology of scribing on the surface of an oriented silicon steel to refine magnetic domains and reduce the steel loss of the oriented silicon steel can be divided into two categories according to the effect of scribing: One is to form scores (scribed marks) that are not resistant to stress relief annealing, by using laser, plasma beam, electron beam and other means to form linear thermal stress regions at a certain distance on the surface of the oriented silicon steel, thereby reducing the width of main magnetic domain and reducing iron loss. Since the linear thermal stress disappears due to stress relief annealing, the product thus produced is generally used to manufacture laminated core transformers that do not require stress relief annealing. The other is to form scores that are resistant to stress relief annealing, and its basic solution is to form linear strain regions or grooves on the surface of an oriented silicon steel by means of mechanical gear rollers, electrochemical corrosion, etc., to reduce the width of 180° magnetic domains, thereby reducing iron loss. Since the strain regions do not change after stress relief annealing, the product thus produced can be used to manufacture wound core transformers that require stress relief annealing.

For example, CN1216072A, published on May 5, 1999, and titled "Grain-oriented electrical steel sheets having excellent magnetic characteristics, and manufacturing method and device thereof". discloses a method for laser heat-resistant scribing of oriented silicon steel without damaging the films on the surface of the silicon steel, by controlling the spot size, energy density and other parameters of incident laser to achieve a stress region with a large and deep closed domain area, thereby reduces the iron loss and magnetostriction of the oriented silicon steel.

For another example, CN101528951A, published on September 9, 2009, and titled "Unidirectional magnetic steel sheet excellent in iron loss characteristic" discloses a unidirectional electromagnetic steel sheet with excellent iron loss characteristics. The patent further considers stress distribution state formed by laser scribing, and finely controls the integral value of compressive residual stress generated by laser irradiation of the steel sheet, thereby improving the iron loss improvement rate of laser scribing. However, in the technical solution, because the determination of residual stress depends on offline detection methods such as X-ray diffraction, its detection cycle time is relatively long, so it still faces certain difficulties in actual large-scale production.

For another example, CN102477484A, published on May 30, 2012, and titled "Fast-speed laser scoring method" discloses a rapid laser scribing method, in which the upper and lower surfaces of a strip steel are simultaneously scribed in a staggered manner at equal intervals to ensure the uniformity of iron loss improvement effect brought by scribing. However, it should be noted that the scribing of the upper and lower surfaces requires vibration of the strip steel to be controlled in a high-precision manner, and spatial layout therefor is relatively complex, so the implementation of this technical solution is relatively difficult.

However, the inventors of the present invention have found through extensive research that when laser scribing is performed using laser irradiation to form local stress, local areas on the surface of the steel plater will rise in temperature because heat absorption. The thermal conductivity of the silicon steel is isotropic, so it is very difficult to obtain a thermal stress region that is deep in the thickness direction of the steel plate and narrow in width in rolling direction.

**In** the prior art, laser scribing usually uses a laser spot with elliptical features, and the long axis of the elliptical spot is controlled to be consistent with the direction of scanning and approximately consistent with the direction perpendicular to the direction of rolling the steel plate, so as to obtain a longer residence time and make the temperature of the local areas of the steel plate rise to a range sufficient to produce a magnetic domain refinement effect. However, whether using a continuous laser or a pulsed laser, heat generated by laser irradiation will always accumulate rapidly. If the residence time of the laser irradiation is too long, although better iron loss reduction effect can be produced, there will be inevitably a problem of coating damage due to too high temperature, which will increase the risk of short-circuit breakdown of transformer in service. If the residence time of the laser irradiation is too short, the coating will not be damaged, but the effect of reducing iron loss achieved by laser scribing will be limited.

Therefore, in order to solve the problem existing in the prior art, the present inventors propose a new laser scribing method with controllable temperature rise, so as to effectively improve and reduce iron loss of oriented silicon steel without damaging the surface coating of the steel plate.

## SUMMARY

One of the objects of the present invention is to provide a method for laser scribing an oriented silicon steel plate. The method for laser scribing has been optimized for previous processes, using a beam splitting laser focusing scanning method, which can further improve the refinement of magnetic domains to reduce the iron loss without losing the surface coating of the oriented silicon steel. The oriented silicon steel plate made by the laser scribing method has the characteristics of low iron loss and coating breakdown resistance, and can be used to manufacture energy saving transformers for ultra-high voltage transmission networks. The laser scribing method has broad application prospects.

In order to achieve the above-mentioned object, the present invention provides a method for laser scribing an oriented silicon steel plate, comprising: forming multiple focused light spots (or focused spots) on a surface of the oriented silicon steel plate by laser beam splitting corresponding to each length position along the direction of rolling the oriented silicon steel plate when laser scribing the surface of oriented silicon steel plates, wherein the multiple focused light spots are arranged along the width direction of the oriented silicon steel plate and have energy gap areas between each other, and wherein the dimension b of each focused light spot in the width direction of the oriented silicon steel plate is greater than the dimension a in the lengthwise direction of the oriented silicon steel plate.

Herein, "corresponding to each length position along the direction of rolling the oriented silicon steel plate" refers to a position where a laser focused spot is extended and elongated in the width direction of the steel relative to the direction of rolling the steel plate, and the position where a scribed line is to be formed is scanned in the form of this long light spot.

In the current prior art, there are three main methods in this field to reduce iron loss and vibration noise level of oriented silicon steel plate: (1) metallurgical method: by optimizing composition system and process parameters, a perfect secondary recrystallization structure is obtained and orientation degree is increased; (2) tension control: by improving tension of the surface coating of a substrate and refining magnetic domains, iron loss and magnetostriction are reduced; (3) surface scribing: by means of laser, electron beam, plasma, etc., continuous or discontinuous scribing lines with certain spacing are applied on the surface of silicon steel along the direction of rolling, and stress or strain is applied to refine the magnetic domains and reduce iron loss.

In recent years, by using metallurgical methods, degree of orientation has been improved to a very high level, and average-orientation deviation angle of grains in Hi-B steel is less than 5°. Tension coating and surface scribing technologies have also been matured and commercially applied, and oriented silicon steel plates with good magnetic properties are obtained.

However, with the development of world economy and the growth of population, people's requirements for living environment are getting higher and higher. This requires further improvements in energy efficiency to reduce unnecessary losses. For oriented silicon steel used for manufacturing the core material of energy saving transformer in power transmission network, it is necessary to further reduce iron loss. Laser scribing technology used so far forms local thermal stress through laser irradiation, thereby reducing the width of magnetic domains to reduce iron loss. In actual use process, high laser energy introduces more heat, which has a better effect on refining magnetic domains and reducing iron loss. Therefore, improvement of high iron loss requires introduction of higher laser energy. However, excessive laser energy may cause damage to silicate and phosphate coatings on the surface of oriented silicon steel, increasing the risk of inter-layer conduction during service, that is, low laser energy is needed for the surface coating of oriented silicon steel not to be damaged. In order to prevent damage to the surface coating of oriented silicon steel, heat introduced by laser is limited in laser scribing technologies currently used in commercial applications, and iron loss reduction effect is generally around 10%~15%. It is very difficult to further reduce the iron loss.

Therefore, the inventors have innovatively designed a new composite laser scribing method to address the contradiction between the iron loss improvement effect of oriented silicon steel and the laser energy required for its surface coating to remain undamaged, so as to further improve the iron loss reduction effect without damaging the surface coating of oriented silicon steel.

In the present invention, the inventors studied in detail temperature rise phenomenon caused by irradiation of steel plate surface during laser scribing process, and found that the temperature of local micro-region on the steel plate surface is continuously rising due to continuous laser irradiation. When the temperature of the region rises to damage threshold of the surface coating, the surface coating of the steel plate will also break due to excessive temperature.

In recent years, researchers in this field have proposed the use of beam shaping to shape the spot focused on the surface of a steel plate into an ellipse or rectangle, which has a longer length in the direction of laser scanning. This solution effectively disperses laser energy and avoids excessive temperature rise in local regions caused by excessive energy concentration. At the same time, the extension of spot size in scanning direction increases laser irradiation time (i.e., residence time) in local micro-regions, which can effectively diffuse heat generated by irradiation to the surrounding areas of the local micro-regions, forming a thermal stress zone that has a larger width in the direction of rolling and is deep in thickness direction, which is beneficial to the refinement of magnetic domains and achieves significant results. However, in this solution, the local micro-regions on the surface of the silicon steel still continuously receive heat from laser irradiation, and at the same time, due to fast running speed of production line and fast laser scanning speed matching with the running speed, which is usually 100m/s or even 200m/s or more, and the residence time is in microseconds. Therefore, there is still a problem that insulation film on the surface is easily damaged due to excessive temperature rise.

In order to solve this problem, the inventors designs the laser scribing method of the present invention wherein a beam splitting method is used to divide incident light beam into several beams, and the spacing of thus formed focused light spots in the direction of laser scanning and the energy distribution of each light spot is strictly controlled, so as to realize the control of the temperature rise on the surface of the steel plate caused by laser irradiation, forming a larger thermal stress zone in the thickness range of the steel plate, which can not only increase the iron loss improvement rate of the oriented silicon steel plate before scribing to 15% or more, but also avoid damage to thin film on the surface of the steel plate caused by excessive temperature rise.

Preferably, in the method for laser scribing an oriented silicon steel plate of the present invention, the focused light spots are elliptical or rectangular.

In the above technical solution of the present invention, the focused light spot formed by laser can be realized by a combination of one or more means such as a diffraction beam splitter and a polarization beam splitter, and the shape of the focused light spots formed can be elliptical or rectangular.

Preferably, in the method for laser scribing an oriented silicon steel plate of the present invention, corresponding to each length position along the direction of rolling the oriented silicon steel plate, the total length D of the multiple focused light spots extending in the width direction of the oriented silicon steel sheet is $\leq$80 mm.

In the above technical solution of the present invention, due to heat transfer of the oriented silicon steel plate being isotropic, if total residence time of laser is too long, heat will diffuse over a larger range in the rolling direction of the steel plate, thereby forming a larger thermal stress zone, which not only increase hysteresis loss, but also reduce magnetic induction. Therefore, extended total length of the multiple focused light spots formed needs to be controlled within a certain range so that the total residence time is limited within a certain range. After repeated experiments, the inventors determined that the extended total length of the multiple focused light spots arranged along the width direction of the oriented silicon steel plate can be preferably controlled to be $\leq$ 80mm. When the total length exceeds 80mm, the hysteresis loss increase, resulting in an increase in total loss and a decrease in magnetic induction $B_8$.

Preferably, in the method for laser scribing an oriented silicon steel plate of the present invention, the oriented silicon steel plate has a dimension a along its length direction of 10-100$\mu$m.

Preferably, in the method for laser scribing an oriented silicon steel plate of the present invention, the oriented silicon steel plate has a dimension b along its width direction of $\leq$ 8mm. If the dimension b exceeds 8 mm, the total length of the light spots will be difficult to control, and long residence time will cause heat accumulation and destruction of the surface coating.

Preferably, in the method for laser scribing an oriented silicon steel plate of the present invention, corresponding to each length position along the direction of rolling the oriented silicon steel plate, the ratio of a length ds of an energy gap area between a leading focusing spot and a trailing focusing spot to the length of the leading focusing spot in the direction of laser scanning is between 0.5 and 2.

In the above technical solution of the present invention, the size of energy gap area between focused light spots also has a direct impact on temperature reduction formed during scanning. The ratio of the energy gap area between each focused light spot and the next focused light spot to the focused light spot in length is controlled between 0.5-2. When the ratio is lower than 0.5, it is difficult to achieve effective temperature reduction, and the surface coating of the oriented silicon steel will crack; when the ratio is higher than 2, the temperature reduction is too large, and the trailing focused light spot is difficult to maintain the surface temperature of the steel plate within a range where sufficient thermal stress is generated, and the effect of magnetic domain refinement and reducing iron loss cannot be obtained.

Preferably, in the method for laser scribing an oriented silicon steel plate of the present invention, power density p of each focused light spot is 1000-3000W/mm.

In the above technical solution of the present invention, in order to achieve the purpose of reducing iron loss without damaging the surface coating, the value range of the power density p of laser focused spot is further controlled. When the power density exceeds 3000W/mm$^2$ , excessive large energy will cause damage to the surface coating of the oriented silicon steel plate; and when the power density is lower than 1000W/mm$^2$ , laser energy is too low, and it is difficult to form an effective thermal stress zone on the surface of the oriented silicon steel plate, so it is insufficient to achieve magnetic domain refinement effect, and iron loss improvement rate is low.

Preferably, in the method for laser scribing an oriented silicon steel plate of the present invention, along laser scanning direction, power density ratio of the trailing focused light spot to the leading focused light spot is 0.75-0.95.

Through repeated experiments, the inventors determined that the power density ratio of the trailing focused light spot to the leading focused light spot is 0.75-0.95. When the ratio is lower than 0.75, energy carried by the trailing focused spot is too little, and the surface temperature of the steel plate begins to gradually decrease after initial laser spot scanning, making it difficult to form an effective thermal stress zone, and the effect of magnetic domain refinement in reducing iron loss is limited; when the ratio is higher than 0.95, energy carried by the trailing focused spot is too large, and the surface temperature of the steel plate gradually increase, still reaching damage threshold of the surface coating.

Preferably, in the method for laser scribing an oriented silicon steel plate of the present invention, the multiple focused light spots are formed by at least one of a diffraction beam splitter and a polarization beam splitter.

Another object of the present invention is to provide an oriented silicon steel plate, which has the characteristics of low iron loss and coating breakdown resistance, can be used to manufacture energy saving transformers for ultra-high voltage transmission networks and has very broad application prospects.

In order to achieve the above object, the present invention provides an oriented silicon steel plate, which is produced by the laser scribing method of the present invention.

When manufacturing the oriented silicon steel plate of the present invention, steel with a certain amount of silicon can be first subjected to ironmaking, steelmaking, and continuous casting, and then subjected to hot rolling process, followed by one cold rolling or two cold rolling processes with intermediate annealing, to roll the steel into silicon steel plates with target thickness.

Then, the manufactured silicon steel plate is subjected to decarburization annealing to form a primary recrystallized steel plate with an oxide film on the surface; after a magnesium oxide release agent is coated, the silicon steel plate is subjected to high temperature annealing, and forms a silicon steel plate with a Gaussian texture through secondary recrystallization, and the oxide film on the surface reacts with the release agent to form a magnesium silicate bottom layer. After that, the silicon steel plate is subjected to hot stretching, flattening, annealing, coating and baking process, and then the laser scribing of the present invention is applied on the surface of the steel plate to produce a finished oriented silicon steel plate.

Preferably, in the manufacturing method of the present invention, the iron loss improvement rate of the oriented silicon steel relative to that before scribing is increased to 15% or more.

Compared with the prior art, the method for laser scribing a low iron loss oriented silicon steel plate and the oriented silicon steel plate of the present invention have the following beneficial effects:
In the present invention, the inventors design a new laser scribing method in which an optimized laser scribing method is used to form a thermal stress zone, such that temperature rise of the steel plate can be controlled, and iron loss of the oriented silicon steel plate is reduced without damaging surface coating on scribed areas.

When applying the laser scribing method of the present invention, multiple focused light spots are formed on the surface of the steel plate by adopting laser beam splitting method, and the power density of each focused light spot is controlled between 1000-3000W/$mm^2$; corresponding to each length position along the rolling direction of the oriented silicon steel plate, the ratio of the energy gap area and the corresponding focused light spot in length in the scanning direction is controlled between 0.5-2; at the same time, along the direction of laser scanning, the power density ratio of the trailing focused light spot to the leading focused light spot is controlled between 0.75-0.95.

According to the laser scribing method of the present invention, continuous temperature rise of the surface of the steel plate caused by continuous accumulation of laser thermal radiation can be effectively avoided due to the existence of energy gaps between the focused spots of laser beam splitting. Therefore, while ensuring the integrity of the coating in the micro-region where the surface is scribed, the effect of reducing iron loss by magnetic domain refinement is improved, and the iron loss improvement rate of the steel plate relative to that before scribing is increased to 15% or more. The low iron loss oriented silicon steel plate thus manufactured can be used to manufacture energy saving transformers for ultra-high voltage transmission networks, and has broad application prospects.

## BRIEF DESCRIPTION OF THE DRAWINGS

FIG. 1 is a schematic diagram of the laser scribing method of the present invention using laser beam splitting to form focused spots and to scan the surface of a steel plate.

FIG.2 is a schematic diagram showing that the focused light spot of the present invention is focused on the surface of a steel plate.

FIG. 3 is a schematic diagram showing relationship between irradiation time and temperature change of a local micro-region on the surface of a steel plate when the steel plate is scribed by the laser scribing method of the present invention and a conventional laser scribing method.

FIG. 4 is a schematic system architecture diagram showing an optical path system for carrying out the laser scribing method of the present invention.

## DETAILED DESCRIPTION

The laser scribing method for low iron loss oriented silicon steel plate and the oriented silicon steel plate of the present invention will be further explained and described below in conjunction with drawings and specific embodiments. However, the explanation and description do not constitute improper limitations on the technical solutions of the present invention.

FIG. 1 is a schematic diagram showing the laser scribing method of the present invention using laser beam splitting to form focused spots and scan the surface of a steel plate.

FIG. 2 is schematic diagram showing the focused light spots of the present invention being focused on the surface of a steel plate.

It can be seen from FIG. 1 and FIG. 2 that these figures are schematic diagrams showing the laser scribing method of the present invention using laser beam splitting to form multiple focused light spots on the surface of a steel plate.

In the present invention, after splitting incident laser beam, multiple focused light spots 1, 2, 3...... n-1, n are formed on the surface of the steel plate, and the lengths of the focused light spots in the laser scanning direction (i.e., the width direction of the oriented silicon steel plate) are b1, b2, b3......$b_{n-1}$, $b_n$, respectively, the multiple focused light spots are arranged along the width direction of the oriented silicon steel plate, and have energy gap areas between each other, with lengths of $ds_1$, $ds_2$, $ds_3$...... $ds_{n-1}$, respectively. The sum of the lengths of the focused light spots in the width direction of the oriented silicon plate is total spot length D.

In this application, "preceding focusing spot" and "trailing focusing spot" refer to any two adjacent focusing spots along the laser scanning direction. For example, if the laser scanning direction starts from spot 1 in FIG. 2, spot 1 is the "preceding focusing spot", and spot 2 is the "trailing focusing spot". Similarly, for spot 2 and spot 3, spot 2 is the "preceding focusing spot" and spot 3 is the "trailing focusing spot", and so on.

In this embodiment, the lengths of the focused light spots in the direction perpendicular to the laser scanning direction (i.e., the length direction of the oriented silicon steel sheet) can be set to a uniform value a. Of course, in some other embodiments, the lengths of different focused light spots in the direction perpendicular to the laser scanning direction may be different, but they all need to meet the range of laser power density required in the present invention. Under normal production conditions, laser scanning speed is very fast, reaching 100m/s or more, and a full-width scan of a steel plate with a width of about 1m only takes 0.01s or less. Therefore, in order to simplify spatial layout in production, laser scanning direction is usually made roughly the same as the width direction of the steel plate.

It should be noted that the inventors have also studied in detail the process of the temperature rise of the silicon steel surface during the laser scribing, and the result is shown in FIG. 3. FIG. 3 schematically shows relationship between irradiation time and temperature change of a local micro-region on the surface of a steel plate when the steel plate is scribed by the laser scribing method of the present invention and a conventional laser scribing method.

In the relationship diagram shown in FIG. 3, the laser scribing method of the present invention corresponds to the solid line in FIG. 3, and the conventional laser scribing method corresponds to the dotted line in FIG. 3.

Referring to FIG. 3, it can be seen that when using the conventional laser scribing method, because the local micro-region on the surface of the steel plate is continuously irradiated by laser, the temperature in the region increases continuously and reaches a peak value within the laser irradiation residence time range, and then the temperature in the region gradually decreases. On the other hand, when using the laser scribing method designed by the present inventors, due to existence of a certain interval between adjacent focused spots, a certain energy gap area is formed between the focused spots, so the temperature of the local micro-region on the surface of the steel plate is reduced to a certain extent, and the energy of a trailing focused spot is lower than that of a preceding focused spot. The temperature of the irradiated region is always controlled below the damage threshold of the surface coating. At the same time, the total residence time is prolonged, heat diffusion occurs in a larger range, so thermal stress is formed in a larger area, and improvement effect of iron loss can be obtained.

Based on the above principle, it can be determined that the control parameters directly related to the effect of the present invention include: focused spot sizes a and b, power density p of each focused spot, focused spot gap ds, and total spot length D directly related to total laser residence time (see FIG. 2). It should be noted that by splitting single laser beam of the continuous laser or pulsed laser used in conventional techniques into multiple laser beams to form several focused spots with energy gap areas ds between each other, accumulated heat in scribing region on the surface of the steel plate during laser scribing can be reduced. As for the power density p of each focused spot, the focused spot gap ds, and the total spot length D directly related to the total laser residence, they can be selected within any preferred range, as long as continuous temperature rise of the steel plate surface caused by continuous accumulation of laser thermal radiation is effectively avoided while scribed line is formed during laser scribing.

Compared with the prior art, the focused spot designed in the present invention has a smaller size a in the rolling direction of the steel plate (i.e., the length direction of the oriented silicon steel), so as to reduce diffusion of laser irradiation heat in the rolling direction and avoid increase of hysteresis loss. Theoretically, the smaller the size a is, the better the effect of the present invention is. However, in actual industrial production, because the laser scanning range needs to cover the entire width of the steel plate, usually 90mm or even larger, which requires a longer focal length. In addition, for preventing defocusing phenomenon caused by strip steel's fluctuation in shape of plate, a certain focal depth is required, which is sufficient to cover defocusing deviation caused by the fluctuation in shape of plate and shaking of the strip steel. Therefore, the lower limit of the focused spot's size a is limited by optical system and should not be less than 10μm. When the focused spot's size a is lower than this value, the complexity of the optical system is greatly increased, and multiple lasers need to be arranged simultaneously in the plate's width direction to complete laser scribing in the entire width direction of the plate. According to the inventors' research, the upper limit of the size a in the rolling direction of the focused light spot is preferably set at 100 μm. If this value is exceeded, heat will diffuse in the rolling direction, thermal stress zone will increase in areas near scores (scribed marks) in the rolling direction, and hysteresis loss will increase, the total loss will not decrease further, and the magnetic induction $B_8$ will also decrease.

In the present invention, after incident laser is split by a diffraction beam splitter and a polarization beam splitter, multiple focused light spots are formed on the surface of an oriented silicon steel plate. The focused light spots are usually elliptical, having a spot size b in the laser scanning direction (i.e., the width direction of the oriented silicon steel plate) larger than a rolling direction size a, so as to make the laser energy as dispersed as possible and prevent formation of excessive power density and damage to the surface coating.

It should be noted that, in the present invention, the power density p of the focused light spot can be an average value, which is defined as follows:

$$p = \frac{P_0}{n \bullet S}$$

wherein $P_0$ is the total output power (W) of a laser; n is the number of the focused spots, and S is the area ($mm^2$) of the focused spots. When the focused spots are elliptical, the calculation formula of the area S of the focused spots can be expressed as:

$$S = \frac{\pi ab}{4}$$

It should be noted that, in some other embodiments, the laser can also form rectangular spots through a beam shaper, and the long side of the rectangle is b, extending along the width direction of the steel plate, the short side of the rectangle is a, extending along the rolling direction of the steel plate (i.e., the length direction of the oriented silicon steel plate). These embodiments where the focused spots are rectangular are also within the scope of the present invention and will not be described in detail here.

**In** order to achieve the purpose of reducing iron loss without damaging the surface coating, in the present invention, it is necessary to strictly control the power density p of laser focus spot. When the power density p exceeds 3000W/$mm^2$ , excessive laser energy will cause damage to the surface coating; when the power density p is lower than 1000W/$mm^2$, laser energy is too low, and it is difficult to form an effective thermal stress zone on the surface of the oriented silicon steel sheet, so it is insufficient to achieve a magnetic domain refinement effect, and iron loss improvement rate is low. Therefore, in practical applications, it is necessary to control the power density of each focus spot between 1000-3000W/$mm^2$ .

In the present invention, after laser beam splitting, the gap between adjacent focused spots will cause a certain temperature decease in relevant area, which can avoid the surface coating being damaged due to excessive temperature of scanning area. Therefore, it is necessary to control the power distribution ratio of the trailing focused spots and the preceding focused spots as well as the size of the energy gap area ds.

Through repeated experiments, the inventors determined that the power density ratio of a trailing focused spots to a preceding focused spots is 0.75-0.95, that is, the range of $\frac{p_n}{p_{n-1}}$ should be 0.75-0.95. When the value of $\frac{p_n}{p_{n-1}}$ is lower than 0.75, the energy carried by the trailing focused spot is too little, and the surface temperature of the steel plate begins to gradually decrease after initial laser spot scanning, so it is difficult to form an effective thermal stress zone, and the effect of magnetic domain refinement in reducing iron loss is not significant; when the value of $\frac{p_n}{p_{n-1}}$ is higher than 0.95, the energy carried by the trailing focused spot is too large, and the surface temperature of the steel plate gradually increases, and the damage threshold of the surface coating will still be reached.

The size of the energy gap area ds between the focused spots also has a direct impact on the temperature decrease generated during scanning. The ratio of the length of the energy gap area between each focused spot and the next focused spot to the length of the focused spot in the scanning direction should be controlled between 0.5-2, that is, the range of $\frac{ds_{n-1}}{b_{n-1}}$ should be 0.5-2. When the value of $\frac{ds_{n-1}}{b_{n-1}}$ is lower than 0.5, it is difficult to form an effective temperature decrease, and the surface coating of the oriented silicon steel will crack; when the value of $\frac{ds_{n-1}}{b_{n-1}}$ is higher than 2, the temperature decrease is too large, and a trailing focused spot is difficult to maintain the surface temperature of the steel plate in a range thatcan generate sufficient thermal stress, and it is impossible to achieve the effects of magnetic domain refinement and reduction of iron loss.

Therefore, extended total length of the multiple focused light spots formed needs to be controlled within a certain range so that the total residence time is limited within a certain range. After repeated experiments, the inventors determined that extended total length of the multiple focused light spots arranged along the width direction of the oriented silicon steel plate can be preferably controlled to be ≤ 80mm. When the total length exceeds 80mm, hysteresis loss increase, resulting in an increase in total loss and a decrease in magnetic induction $B_8$.

In addition, it should be noted that due to isotropic heat transfer of oriented silicon steel sheets, if total residence time of laser is too long, heat will diffuse over a larger range in the rolling direction of the steel plate, forming a larger thermal stress zone, which will increase hysteresis loss and reduce magnetic induction. Extended total length of the multiple focused light spots needs to be controlled within a certain range so that the total residence time is limited within a certain range. After repeated experiments, the inventors determined that the extended total length D of the multiple focused light spots in the width direction of the oriented silicon steel sheet is preferably controlled to be ≤80 mm. When the total length exceeds 80 mm, the hysteresis loss will increase, resulting in an increase in the total loss and a decrease in the magnetic induction $B_8$.

In the present invention, the calculation formula for the extended total length D of the multiple focused light spots is as follows:

$$D = \sum_1^n b_n + \sum_1^{n-1} ds_n$$

FIG. 4 schematically shows a system architecture diagram of an optical path system for carrying out the laser scribing method of the present invention.

In FIG. 4, as an example, an optical path system for carrying out the laser scribing method of the present invention is illustrated, and other systems can also be used for achieving spectral focusing effect required in the present invention, and these systems are also within the scope of the present invention. In the optical path shown in FIG. 4, laser beam 8 is emitted from laser 1, passes through reflector 2, reflector 3, and then passes through beam shaping system 4 to form a beam with an elliptical energy distribution. It then passes through diffraction spectroscopic element 5 to form multiple beams, which pass through scanning focusing mirror 6 and quickly scan the surface of the oriented silicon steel plate 7 to form a scribing stress zone 9.

As for the use of laser source, there is no special limitation in this invention. A commonly used laser in the field is a continuous laser with a wavelength of 1066 nm. Other lasers can also be used for achieving the object of the present invention and are not described in details here.

In the following, the technical solution of the present invention will be illustrated with specific examples, showing the beneficial effects brought by the laser scribing method designed by the present inventors.

**Examples 1 to 7 and Comparative Examples 1 to 2**

The oriented silicon steel sheets of Examples 1-7 and Comparative Examples 1 to 2 were manufactured by the following steps:

(1) subjecting oriented silicon steel to ironmaking, steelmaking, continuous casting, hot rolling, and then cold rolling it to a final thickness of 0.22 mm, and after decarburization annealing at 850°C, coating a MgO isolation agent on the surface of the oriented silicone steel to form a surface oxide layer, following by rolling into steel coil, and keeping at a high temperature annealing condition of 1200°C for 20 hours, and then cleaning and drying unreacted residual MgO on the surface, and applying an insulating coating on the surface of the oriented steel plate;
(2) laser-scribing the oriented silicon steel on one side along its transverse direction.

When laser scribing the surface of the oriented silicon steel plate, multiple focused spots are formed on the surface of the oriented silicon steel plate by laser beam splitting corresponding to each length position along the rolling direction of the oriented silicon steel plate; the multiple focused light spots are arranged along the width direction of the oriented silicon steel plate and have energy gap areas between each other; the dimension b of each focused light spot along the width direction of the oriented silicon steel plate is greater than the dimension a along the length direction of the oriented silicon steel plate.

During the laser scribing, the dimension a is controlled to be 10-100μm; corresponding to each length position along the rolling direction of the oriented silicon steel sheet, the total length D of the multiple focused light spots arranged along the width direction of the oriented silicon steel sheet is controlled to be ≤80 mm; the ratio ds/b of the length ds of the energy gap area and the corresponding length b of the focused light spot in the scanning direction is controlled between 0.5-2; the power density of each focused light spot is controlled to be 1000-3000 W/mm$^2$; and along the laser scanning direction, the power density ratio of a trailing focused light spot to a preceding focused light spot is controlled to be 0.75-0.95.

It should be noted that as the laser used in Examples 1 to 7 and Comparative Examples 1 to 2, a continuous single-mode fiber laser with a wavelength of 1066 nm was used. a customized diffractive optical element was used to split the light beam into sub-beams with different parameters, and the surface of the steel plate was scanned to form a scribing stress zone, wherein no diffractive optical element was used for light splitting in the comparative examples, and the power density was adjusted by adjusting the laser output power.

The laser scribing process adopted in the present invention is performed after final annealing of the oriented silicon steel. Therefore, in the present invention, there is no particular limitation on the oriented silicon steel plate and in actual applications, it is not limited to the oriented silicon steel plate made by the above process

The process parameters of the oriented silicon steel sheets of Examples 1-7 and Comparative Examples 1-2 in the above process are shown in Table 1.

Table 1

| | Laser's total output power Po (W) | a (mm) | b (mm) | Power density ratio of preceding focused spot to trailing focused spot | Laser scanning speed (m/s) | Number of focused light spots n | Distance ds between adjacent focused spots (mm) | ds/b | D (mm) | Power density p (W/mm$^2$) |
|---|---|---|---|---|---|---|---|---|---|---|
| Example 1 | 2000 | 0.08 | 3 | 0.75 | 200 | 6 | 4 | 1.3 | 38 | 1768 |
| Example 2 | 2000 | 0.08 | 4 | 0.8 | 200 | 3 | 3 | 0.8 | 18 | 2653 |
| Example 3 | 2000 | 0.04 | 4 | 0.85 | 200 | 8 | 4 | 1.0 | 60 | 1989 |
| Example 4 | 2000 | 0.03 | 6 | 0.9 | 200 | 8 | 4 | 0.7 | 76 | 1768 |
| Example 5 | 2000 | 0.02 | 6 | 0.95 | 200 | 8 | 4 | 0.7 | 76 | 2653 |
| Example 6 | 1100 | 0.01 | 5 | 0.8 | 250 | 10 | 3 | 0.6 | 77 | 2801 |
| Example 7 | 3000 | 0.04 | 4 | 0.8 | 250 | 9 | 5 | 1.3 | 76 | 2653 |
| Comparative Example 1 | 3000 | 0.08 | 16 | - | 200 | 1 | - | - | 16 | 1989 |
| Comparative Example 2 | 1000 | 0.08 | 16 | - | 200 | 1 | - | - | 16 | 995 |

The magnetic conductivity ($B_8$) and iron loss ($P_{17/50}$) of the oriented silicon steel plates of Embodiments 1-7 and Comparative Examples 1-2 were tested before and after laser scribing, by using the method described in GB/T 13789-2008, and the rolling direction and transverse length of the samples prepared in the Examples and Comparative Examples were controlled to be 500 mm, so as to measure the values of magnetic flux density $B_8$ of the oriented silicon steel under an excitation magnetic field of 800A/m, and the invalid electric energy $P_{17/50}$ consumed by magnetization when the magnetic flux density under an AC excitation magnetic field of 50Hz reached 1.7T. Further, the degree of coating damage in scribed regions of the oriented silicon steel plates of Examples 1-7 and Comparative Examples 1-2 was also tested, and the relevant test results are shown in the following Table 2.

Table 2

| | Before scribing | | After scribing | | Magnetic changes | | | Degree of coating damage in scribed region |
|---|---|---|---|---|---|---|---|---|
| | $P_{17/50}$ (W/kg) | $B_8$ (T) | $P_{17/50}$ (W/kg) | $B_8$ (T) | $\Delta P_{17/50}$ (W/kg) | $\Delta B_8$ (T) | $\Delta P_{17/50}$ (%) | |
| Example 1 | 0.873 | 1.925 | 0.726 | 1.921 | 0.147 | 0.004 | 16.8% | complete |
| Example 2 | 0.834 | 1.928 | 0.702 | 1.919 | 0.132 | 0.009 | 15.8% | complete |
| Example 3 | 0.855 | 1.92 | 0.713 | 1.91 | 0.142 | 0.01 | 16.6% | complete |
| Example 4 | 0.862 | 1.921 | 0.721 | 1.913 | 0.141 | 0.008 | 16.4% | complete |
| Example 5 | 0.871 | 1.922 | 0.725 | 1.916 | 0.146 | 0.006 | 16.8% | complete |
| Example 6 | 0.866 | 1.927 | 0.733 | 1.922 | 0.133 | 0.005 | 15.4% | complete |
| Example 7 | 0.851 | 1.920 | 0.714 | 1.912 | 0.137 | 0.008 | 16.1% | complete |
| Comparative Example 1 | 0.857 | 1.922 | 0.733 | 1.908 | 0.124 | 0.014 | **12.1%** | **broken** |
| Comparative Example 2 | 0.866 | 1.919 | 0.831 | 1.915 | 0.035 | 0.004 | **4.0%** | complete |

It can be seen from Table 2 above that the oriented silicon steel plates after laser scribing of Embodiments 1-7 have good iron loss and magnetic conductivity, the surface coatings thereof are not damaged, and reduction in iron loss due to magnetic domain refinement is significant. Compared with before scribing, the iron loss improvement rate can reach 15% or more.

On the other hand, the oriented silicon steel sheet after laser scribing of Comparative Example 1 achieved a higher iron loss improvement effect by adjusting laser power, but the coatings thereof were damaged by heat accumulation; correspondingly, when laser scribing was performed on the oriented silicon steel plate of Comparative Example 2, laser power was lowered. Although the coating on the surface of the steel sheet after scribing was complete, the iron loss improvement effect was poor.

It should be noted that the embodiments shown above are merely illustrative of the present invention, and the present invention should not be construed as limited to these embodiments. Any changes or variations that can be directly derived or easily conceived by those skilled in the art from the disclosure in the present application should be considered within the scope of the present invention.

## Claims

1. A method for laser scribing an oriented silicon steel plate, comprising: forming multiple focused light spots on a surface of the oriented silicon steel plate by laser beam splitting, corresponding to each length position along the direction of rolling the oriented silicon steel plate when laser scribing the surface of the oriented silicon steel plate, wherein the multiple focused light spots are arranged along the width direction of the oriented silicon steel plate and have energy gap areas ds between each other, and wherein the dimension b of each focused light spot along the width direction of the oriented silicon steel plate is greater than the dimension a along the length direction of the oriented silicon steel plate.

2. The method for laser scribing an oriented silicon steel plate according to claim 1, wherein the focused light spots are elliptical or rectangular.

3. The method for laser scribing an oriented silicon steel plate according to claim 1, wherein corresponding to each length position along the direction of rolling the oriented silicon steel plate, the total length D of the multiple focused light spots extending in the width direction of the oriented silicon steel plate satisfies: $18mm \leq D \leq 80mm$, preferably $38 \leq D \leq 60mm$.

4. The method for laser scribing an oriented silicon steel plate according to claim 1, wherein the focused light spots have the dimension a along the length direction of the oriented silicon steel plate of 10-100$\mu$m, preferably 40-80$\mu$m.

5. The method for laser scribing an oriented silicon steel plate according to claim 1, wherein the focused light spots have the dimension b along the width direction of the oriented silicon steel plate of 3-8mm, preferably 4-6mm.

**6.** The method for laser scribing an oriented silicon steel plate according to claim 1, wherein corresponding to each length position along the direction of rolling the oriented silicon steel plate, the ratio of a length ds of an energy gap area between a leading focusing spot and a trailing focusing spot to the length of the leading focusing spot in the direction of laser scanning is between 0.5-2, preferably between 0.7-1.3.

**7.** The method for laser scribing an oriented silicon steel plate according to claim 1, wherein the power density p of each focused light spot is 1000-3000W/$mm^2$ .

**8.** The method for laser scribing an oriented silicon steel plate according to claim 1, wherein along the direction of laser scanning, the power density ratio of a leading focused light spot to a trailing focused light spot is 0.75-0.95.

**9.** The method for laser scribing an oriented silicon steel plate according to claim 1, wherein the multiple focused light spots are formed by using at least one of a diffraction beam splitter and a polarization beam splitter.

**10.** The method for laser scribing an oriented silicon steel plate according to claim 2, wherein the focused light spots in elliptical or rectangular shape are formed by a beam shaper.

**11.** An oriented silicon steel plate, comprising a score generated by the method according to any one of claims 1 to 9.

**12.** The oriented silicon steel plate according to claim 11, wherein the improvement rate of iron loss of the oriented silicon steel plate relative to that before scribing is increased to 15% or more.

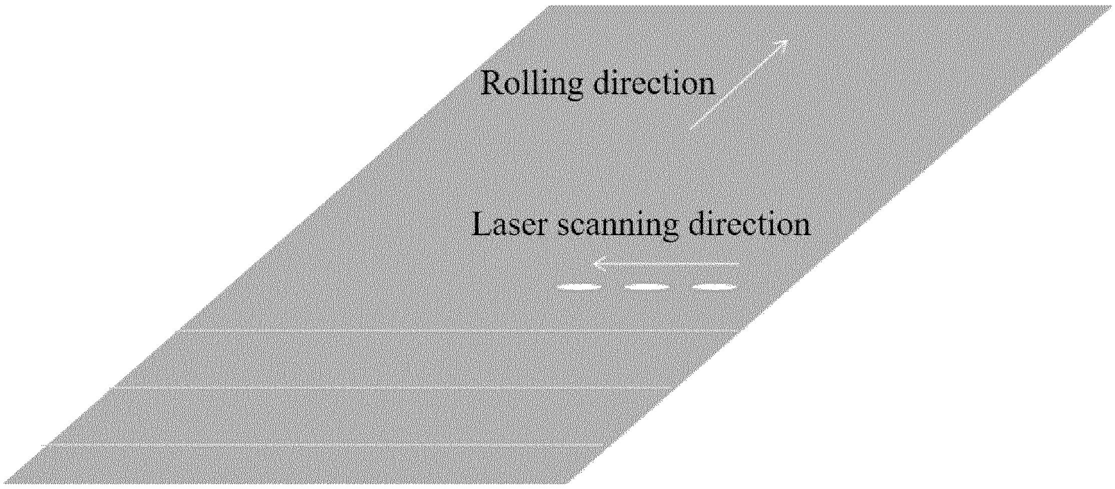


Figure 1

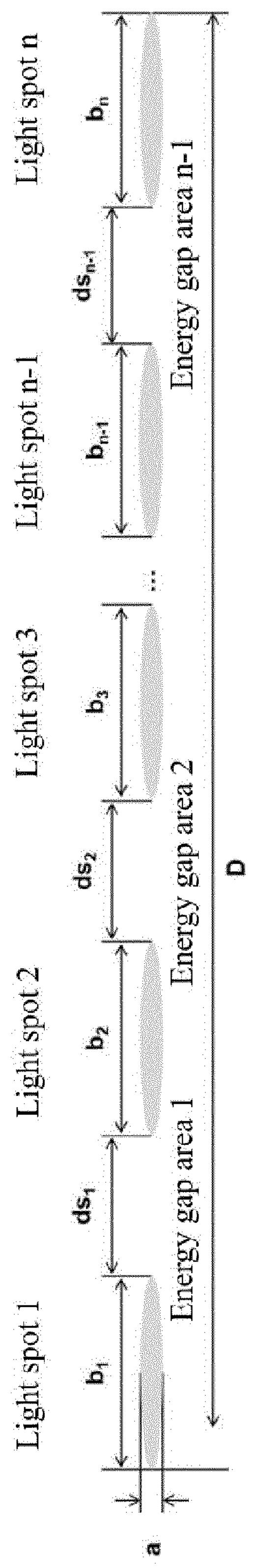
Light spot 1
Light spot 2
Light spot 3
Light spot n-1
Light spot n
Energy gap area 1
Energy gap area 2
Energy gap area n-1
a
$b_1$
$ds_1$
$b_2$
$ds_2$
$b_3$
...
$b_{n-1}$
$ds_{n-1}$
$b_n$
D

Figure 2

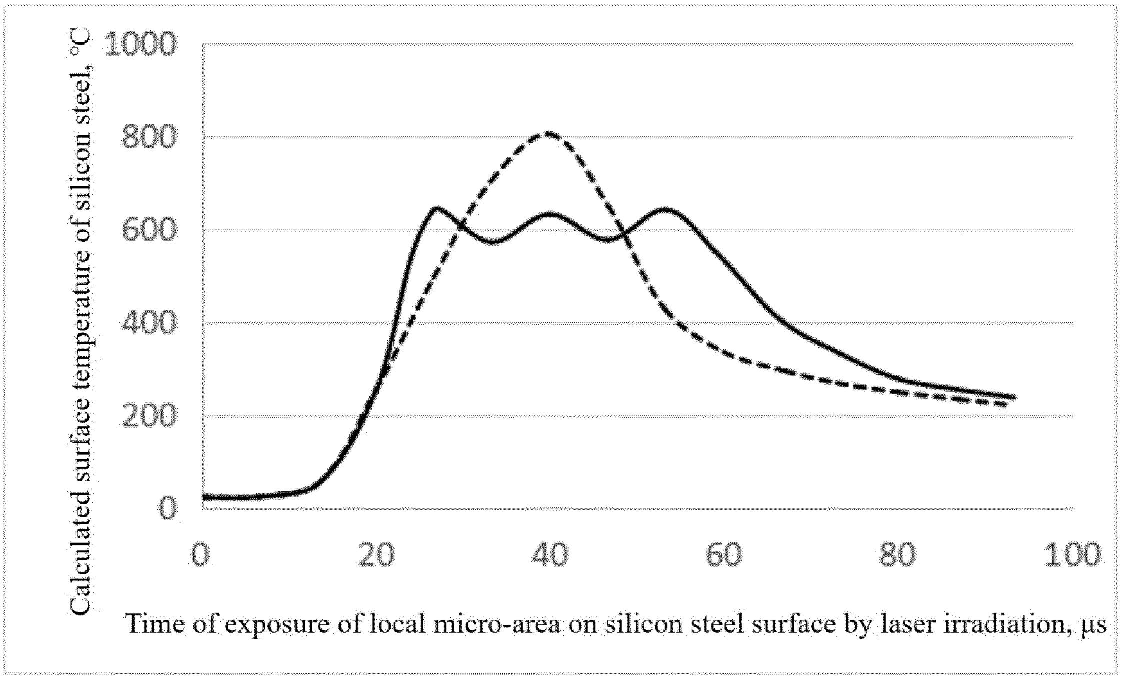
Calculated surface temperature of silicon steel, °C
1000
800
600
400
200
0
0
20
40
60
80
100
Time of exposure of local micro-area on silicon steel surface by laser irradiation, μs

Figure 3

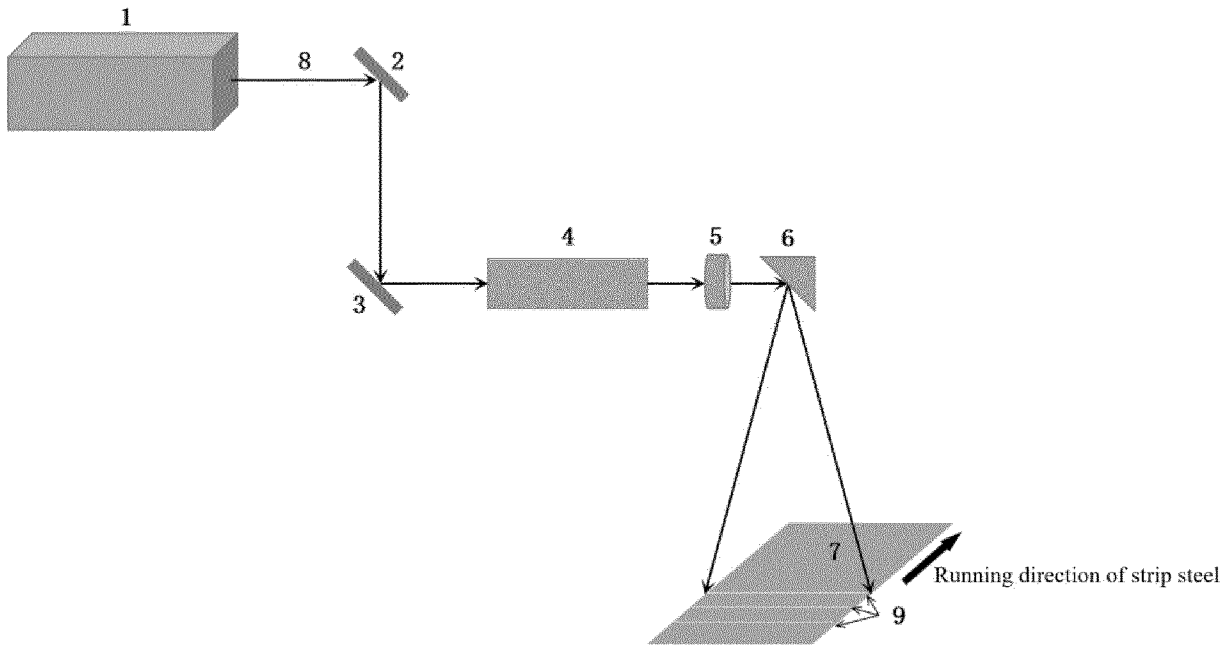


Figure 4

**INTERNATIONAL SEARCH REPORT**

International application No.
**PCT/CN2023/106738**

**A. CLASSIFICATION OF SUBJECT MATTER**

C21D8/12(2006.01)i

According to International Patent Classification (IPC) or to both national classification and IPC

**B. FIELDS SEARCHED**

Minimum documentation searched (classification system followed by classification symbols)

IPC:C21D，B23K

Documentation searched other than minimum documentation to the extent that such documents are included in the fields searched

Electronic data base consulted during the international search (name of data base and, where practicable, search terms used)

CNTXT, ENTXTC, VEN, CJFD: 磁钢, 硅钢, 激光, 光斑, 分束, 分光, 间隙, 间隔, 温度, 温升, 涂层, 点列, silicon steel, magnetic steel, laser, beam, spot, split+, interval, gap, temperature

**C. DOCUMENTS CONSIDERED TO BE RELEVANT**

| Category* | Citation of document, with indication, where appropriate, of the relevant passages | Relevant to claim No. |
|---|---|---|
| X | CN 110323044 A (BAOSHAN IRON & STEEL CO., LTD.) 11 October 2019 (2019-10-11) description, paragraphs 0028-0060, and figures 1-11 | 1-12 |
| A | CN 110093486 A (BAOSHAN IRON & STEEL CO., LTD.) 06 August 2019 (2019-08-06) entire document | 1-12 |
| A | CN 107012303 A (JFE STEEL CORP.) 04 August 2017 (2017-08-04) entire document | 1-12 |
| A | CN 111684087 A (NIPPON STEEL CORP.) 18 September 2020 (2020-09-18) entire document | 1-12 |
| A | CN 101415847 A (NIPPON STEEL CORP.) 22 April 2009 (2009-04-22) entire document | 1-12 |
| A | US 2020362433 A1 (BAOSHAN IRON & STEEL) 19 November 2020 (2020-11-19) entire document | 1-12 |
| A | JP 2003034822 A (NIPPON STEEL CORP.) 07 February 2003 (2003-02-07) entire document | 1-12 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **18 September 2023** | **22 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

INTERNATIONAL SEARCH REPORT

International application No.
**PCT/CN2023/106738**

**C. DOCUMENTS CONSIDERED TO BE RELEVANT**

| Category* | Citation of document, with indication, where appropriate, of the relevant passages | Relevant to claim No. |
|---|---|---|
| A | JP H0790385 A (NIPPON STEEL CORP.) 04 April 1995 (1995-04-04)<br>entire document | 1-12 |

Form PCT/ISA/210 (second sheet) (July 2022)

**INTERNATIONAL SEARCH REPORT**
**Information on patent family members**

International application No.
**PCT/CN2023/106738**

| Patent document cited in search report | Publication date (day/month/year) | Patent family member(s) | Publication date (day/month/year) |
|---|---|---|---|
| CN 110323044 A | 11 October 2019 | KR 20200125704 A | 04 November 2020 |
| | | KR 102430884 B1 | 09 August 2022 |
| | | EP 3760745 A1 | 06 January 2021 |
| | | WO 2019184104 A1 | 03 October 2019 |
| | | CA 3096747 A1 | 03 October 2019 |
| | | US 2021023659 A1 | 28 January 2021 |
| | | US 11633809 B2 | 25 April 2023 |
| | | JP 2021516725 A | 08 July 2021 |
| | | JP 7231642 B2 | 01 March 2023 |
| CN 110093486 A | 06 August 2019 | EP 3748019 A1 | 09 December 2020 |
| | | EP 3748019 B1 | 15 June 2022 |
| | | KR 20200096298 A | 11 August 2020 |
| | | KR 102507090 B1 | 07 March 2023 |
| | | CA 3088327 A1 | 08 August 2019 |
| | | US 2020362433 A1 | 19 November 2020 |
| | | US 11459634 B2 | 04 October 2022 |
| | | WO 2019148742 A1 | 08 August 2019 |
| | | JP 2021512218 A | 13 May 2021 |
| | | JP 7210598 B2 | 23 January 2023 |
| CN 107012303 A | 04 August 2017 | EP 2799579 A1 | 05 November 2014 |
| | | EP 2799579 B1 | 20 June 2018 |
| | | US 2014360629 A1 | 11 December 2014 |
| | | US 10395806 B2 | 27 August 2019 |
| | | JPWO 2013099272 A1 | 30 April 2015 |
| | | JP 6157360 B2 | 05 July 2017 |
| | | WO 2013099272 A1 | 04 July 2013 |
| | | EP 3037568 A1 | 29 June 2016 |
| | | EP 3037568 B1 | 27 March 2019 |
| | | KR 20140111276 A | 18 September 2014 |
| | | KR 101570017 B1 | 17 November 2015 |
| CN 111684087 A | 18 September 2020 | KR 20200103100 A | 01 September 2020 |
| | | KR 102483111 B1 | 30 December 2022 |
| | | JPWO 2019156220 A1 | 04 February 2021 |
| | | JP 7010311 B2 | 10 February 2022 |
| | | US 2021074456 A1 | 11 March 2021 |
| | | US 11551838 B2 | 10 January 2023 |
| | | EP 3751014 A1 | 16 December 2020 |
| | | EP 3751014 B1 | 02 August 2023 |
| | | WO 2019156220 A1 | 15 August 2019 |
| CN 101415847 A | 22 April 2009 | JP 2007277644 A | 25 October 2007 |
| | | JP 5000182 B2 | 15 August 2012 |
| | | KR 20080106305 A | 04 December 2008 |
| | | KR 101060746 B1 | 31 August 2011 |
| | | WO 2007116893 A1 | 18 October 2007 |
| | | EP 2006397 A1 | 24 December 2008 |
| | | EP 2006397 B1 | 27 June 2012 |
| | | US 2009114316 A1 | 07 May 2009 |
| | | US 7763120 B2 | 27 July 2010 |
| US 2020362433 A1 | 19 November 2020 | None | |

Form PCT/ISA/210 (patent family annex) (July 2022)

**INTERNATIONAL SEARCH REPORT**
**Information on patent family members**

International application No.
**PCT/CN2023/106738**

| Patent document cited in search report | Publication date (day/month/year) | Patent family member(s) | Publication date (day/month/year) |
|---|---|---|---|
| JP 2003034822 A | 07 February 2003 | JP 4598321 B2 | 15 December 2010 |
| JP H0790385 A | 04 April 1995 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 1216072 A
- CN 101528951 A
- CN 102477484 A
- GB 137892008 T